(19) Europäisches Patentamt / European Patent Office / Office européen des brevets

(11) **EP 2 946 947 B1**

(12) **EUROPEAN PATENT SPECIFICATION**

(45) Date of publication and mention
of the grant of the patent:
**26.12.2018 Bulletin 2018/52**

(21) Application number: **14756722.6**

(22) Date of filing: **28.02.2014**

(51) Int Cl.:
*B60C 17/00* *(2006.01)*  *B60C 9/00* *(2006.01)*
*B60C 15/06* *(2006.01)*  *D06M 13/395* *(2006.01)*
*D06M 15/693* *(2006.01)*  *D06M 101/32* *(2006.01)*
*D06M 101/36* *(2006.01)*  *B60C 1/00* *(2006.01)*
*B60C 15/00* *(2006.01)*

(86) International application number:
**PCT/JP2014/055188**

(87) International publication number:
**WO 2014/133173 (04.09.2014 Gazette 2014/36)**

(54) **PNEUMATIC SAFETY TIRE**

SICHERHEITSLUFTREIFEN

PNEUMATIQUE DE SÉCURITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2013 JP 2013039806**

(43) Date of publication of application:
**25.11.2015 Bulletin 2015/48**

(73) Proprietor: **Bridgestone Corporation
Tokyo 104-8340 (JP)**

(72) Inventors:
 • **NAKAZATO, Yuta
   Kodaira-shi, Tokyo 187-0031 (JP)**

 • **SATOU, Takayuki
   Kodaira-shi, Tokyo 187-0031 (JP)**

(74) Representative: **Lang, Johannes
   Bardehle Pagenberg Partnerschaft mbB
   Patentanwälte, Rechtsanwälte
   Prinzregentenplatz 7
   81675 München (DE)**

(56) References cited:
**JP-A- 2002 046 411**   **JP-A- 2012 148 661**
**JP-A- 2012 162 230**   **JP-A- 2012 214 139**

**Description**

TECHNICAL FIELD

The present invention relates to a pneumatic safety tire (hereinafter also simply referred to as "tire").

BACKGROUND ART

As tires which can travel a certain distance safely without losing a load supporting ability even in the state in which the inner pressure of the tire (hereinafter briefly referred to as "inner pressure") is decreased due to a puncture or the like, a variety of safety tires of so-called side reinforced type have been proposed. The safety tires of side reinforced type are tires having a structure in which a side reinforcing rubber layer having a relatively high modulus and having a crescent cross sectional shape is disposed in the inner surface of a carcass in the side wall portion of the tire, thereby improving the rigidity of the side wall portion, and allowing the tire to hold loads without extremely increasing the flexural deformation of the side wall portion when the inner pressure decreases.

Meanwhile, at present, as fiber cords for rubber reinforcement used for a carcass ply member of tires for passenger vehicles for ordinary running, a polyester cord made of polyethylene terephthalate (PET) or the like is widely used in view of high strength per weight and excellent dimensional stability, moisture resistant stability, rigidity, cost performance, and the like. Further, aramid cords are also commonly used.

In general, when a cord composed of an organic fiber, such as PET, is used as a reinforcing member of a tire, the cord is subjected to a dipping treatment by an adhesive agent, such as a resorcin-formalin-latex (RFL)-based adhesive agent, then rubberized, and applied to a tire as a rubber-cord composite body. However, since there are few reaction active sites on the surface of a polyester fiber, such as PET, due to a chemical structure thereof, it has been difficult to ensure the adhesive strength between a filament and the adhesive agent in a step of combining the cord and the rubber. As a technique for improving the adhesive property between PET and a rubber, Patent Document 1, for example, discloses a two-bath treatment in which PET is once dipped in an epoxy-based adhesive agent, and then again dipped in an RFL-based adhesive agent.

RELATED ART DOCUMENT

PATENT DOCUMENT

Patent Document 1: Japanese Unexamined Patent Application Publication No. 2000-355875 (claims, etc.)

The documents JP 2012 214139 A (BRIDGESTONE), 8 November 2012 (2012-11-08), JP 2012 162230 A (YOKOHAMA), 30 August 2012 (2012-08-30), and JP 2012 148661 A (BRIDGESTONE), 9 August 2012 (2012-08-09), relate to run-flat tires.

SUMMARY OF THE INVENTION

PROBLEMS TO BE SOLVED BY THE INVENTION

However, there has been a problem in that, in the case in which a safety tire of side reinforced type is made to run with a low inner pressure, along with rolling of the tire, a compression strain cyclically occurs in a concentrated manner between a side reinforcing rubber and a bead filler rubber provided on a tire radial direction outer side of a bead core so that a carcass ply cord is fatigued, a cord strength thereof decreases, and travelling with a low inner pressure becomes difficult.

Moreover, the adhesive property between PET and a rubber can be improved by the two-bath treatment proposed in above Patent Document 1. However, when the two-bath treatment disclosed in above Patent Document 1 is used, there are restrictions, such as requiring a facility dedicated to two baths, which causes an increase in costs. Moreover, in particular, when a tire is used under a high-load and high-temperature environment, a further high adhesive property under input of a dynamic strain, particularly a heat resistant adhesive property between a polyester fiber and a rubber is required, and establishing a new technology has been expected.

Furthermore, there has been also a problem in that, when an adhesive agent composition is formulated with a responsive agent, such as an epoxy compound and an isocyanate, the adhesive agent cures, and accordingly a cord subjected to a coating treatment hardens so that the fatigue property of the cord itself is deteriorated, and compression input to a carcass ply which is generated due to rolling causes the cord strength in the tire to easily decrease. This applies not only to a case in which a polyester fiber is used for a carcass ply cord but also to a case in which an aramid fiber is used for the same. Thus, establishing a new technology in which, when, as a pneumatic safety tire, a tire is used under a high-load and high-temperature environment, a further high adhesive property under input of a dynamic strain between a carcass ply cord and a rubber can be ensured and a sufficient fatigue property of the tire can be ensured has been expected.

Therefore, it is an object of the present invention to provide a pneumatic safety tire in which the durability is improved by improving a compression fatigue property of a carcass ply cord and by improving a heat resistant adhesive property between a carcass ply cord and a rubber.

MEANS FOR SOLVING THE PROBLEMS

Specifically, a pneumatic safety tire of the present invention includes: as a skeleton, a carcass having at least one carcass ply extending between a pair of bead cores embedded in a corresponding pair of bead portions; and a side reinforcing rubber on a tire width direction inner side of the carcass in a side wall portion; in which, in a cross section in a tire width direction, provided that the area of the side reinforcing rubber is S1, the area of the bead filler arranged on a tire radial direction outer side of the bead core is S2, and the area of a rubber chafer arranged on a tire width direction outer side of the bead filler and the bead core is S3, the following expressions (3) and (4) are satisfied:

$$0.20 \leq (S2 + S3)/S1 \leq 1.50 \quad (3)$$

$$0.5 \leq S2/(S2 + S3) \leq 0.80 \quad (4),$$

and

a reinforcing cord of the carcass ply is composed of a polyester fiber and/or an aramid fiber, and coated with an adhesive agent composition in which, on the basis of 100 parts by mass of solid content of a latex, 35 to 100 parts by mass of solid content of a thermosetting resin including a blocked isocyanate is formulated.

EFFECTS OF THE INVENTION

According to the present invention, employing the above configuration has enabled a pneumatic safety tire having an improved durability to be realized.

BRIEF DESCRIPTION OF THE DRAWINGS

FIGS. 1(a) to 1(c) are a half sectional view in the width direction illustrating one example of a pneumatic safety tire of the present invention.
FIG. 2 is a partially cutaway perspective view illustrating further another example of the pneumatic safety tire of the present invention.
FIG. 3 is an explanatory diagram illustrating the generation state of a turbulent flow by protrusion portions for turbulent flow generation.
FIG. 4 is an explanatory diagram illustrating arrangement conditions of the protrusion portions for turbulent flow generation.
FIG. 5 is a sectional view illustrating a rubber test piece used in a dynamic adhesion test in examples.
FIG. 6 is a schematic explanatory diagram illustrating a dynamic adhesion test method in the examples.

MODE FOR CARRYING OUT THE INVENTION

Hereinafter, embodiments of the present invention will be described in detail with reference to the drawings.

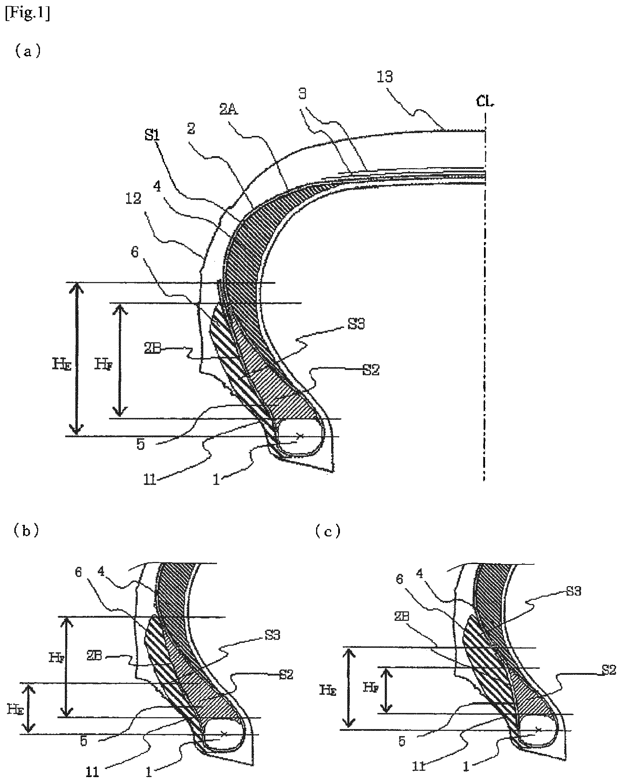

FIGS. 1(a) is a half sectional view in the width direction illustrating one example of a pneumatic safety tire of the present invention. As illustrated, the pneumatic safety tire of the present invention includes, as a skeleton, a carcass 2 having at least one carcass ply extending between a pair of bead cores 1 embedded in a corresponding pair of bead portions 11. The tire as illustrated is a safety tire of so-called side reinforced type which includes two belt layers 3 on a tire radial direction outer side of a crown portion of the carcass 2, and a side reinforcing rubber 4 having a substantially crescent cross sectional shape on a tire width direction inner side of the carcass 2 in a side wall portion 12.

In a cross section in a tire width direction, provided that the area of the side reinforcing rubber 4 is S1, the area of a bead filler 5 is S2, and the area of a rubber chafer 6 is S3, it is important to satisfy the following expressions (1) and (2):

$$0.10 \le (S2 + S3)/S1 \le 2.50 \quad (1)$$

$$0 \le S2/(S2 + S3) \le 0.9 \quad (2).$$

This is for the following reason.

That is, to support loads of a vehicle when the inner pressure of the tire is decreased, enhancing the rigidity of the side wall portion and a bead portion of the tire is required. To enhance the rigidity of the side wall portion, arranging, in the vicinity of a tire maximum width, the side reinforcing rubber 4 having a substantially crescent cross sectional shape on the tire width direction inner side of the carcass ply is effective. Further, to enhance the rigidity of the bead portion, inserting a rubber having a high elastic modulus in the vicinity of a part in which the carcass ply 2 and the bead core 1 are adjacent to each other, and in the vicinity of a part in which a rim and the tire come in contact with each other is effective. In this case, it is considered that the rigidity of the side wall portion can be controlled by the area S1 of the side reinforcing rubber 4, and the rigidity of the bead portion can be controlled by the sum of the area S2 of the bead filler 5 and the area S3 of the rubber chafer 6 (S2 + S3).

From such a point of view, the present inventors have further studied to find out that the relation between the area S1 of the side reinforcing rubber 4 and the sum of the areas of the bead filler 5 and the rubber chafer 6 (S2 + S3), as described above, is defined in accordance with the above expression (1) so that the rigidity of the side wall portion and the bead portion is enhanced in a well-balanced manner, and the tire capable of supporting loads even during decrease of the inner pressure can be obtained. If the value of (S2 + S3)/S1 is less than 0.10, the relative rigidity of the bead portion is decreased, and the tire may develop early trouble in the vicinity of the bead portion. Moreover, if the value of (S2 + S3)/S1 is greater than 2.50, deflection of the side wall portion increases, and the tire may develop early trouble due to rubber fractures by heat generation. The tire of the present invention satisfies the following expression (3):

$$0.20 \le (S2 + S3)/S1 \le 1.50 \quad (3).$$

Thereby, the durability of the tire during run-flat running can be further improved.

Moreover, to avoid decrease in strength of a cord along with cyclical compression input to the carcass ply in the vicinity of the bead portion, it is required for the value of S2/(S2 + S3) which is a ratio of the area S2 of the bead filler 5 to the sum of the areas of the bead filler 5 and the rubber chafer 6 (S2 + S3) to satisfy the above expression (2). If the value of S2/(S2 + S3) is greater than 0.9, during deflection of the tire to which loads are applied, compression input to the carcass ply increases in accordance with deformation of the side wall portion, and decrease in strength of the cord is amplified. The tire of the present invention satisfies the following expression (4):

$$0.5 \le S2/(S2 + S3) \le 0.80 \quad (4).$$

Thereby, avoiding decrease in strength of the cord after the running is enabled.

In the tire of the present invention, it is suitable that, in the cross section in the tire width direction, the area S1 of the side reinforcing rubber 4, the area S2 of the bead filler 5, and the area S3 of the rubber chafer 6 satisfy the above expressions (3) and (4), and a specific formulation, properties, and the like of rubber compositions constituting the respective side reinforcing rubber 4, bead filler 5, and rubber chafer 6 are not particularly limited.

Here, as illustrated, the side reinforcing rubber 4 is arranged between the carcass ply 2 and an inner liner (unillustrated) of the tire to extend from an end portion of the belt 3 beyond a tire maximum width portion to the bead portion 11. Meanwhile, in the present invention, the side reinforcing rubber 4 is not limited to a rubber composed of one rubber composition, but may be composed of a laminated structure or a combined structure of substantially plural rubbers. Moreover, the side reinforcing rubber 4 is not limited to a rubber having a substantially crescent cross sectional shape as illustrated. Further, the bead filler 5 is usually arranged between a body portion 2A of the carcass ply which toroidally extends between the bead cores 1 and a folded-back portion 2B of the carcass ply which is folded back around the bead core 1 from the inside to the outside and on a tire radial direction outer side of the bead core 1. Still further, in the rubber chafer 6, a lower end portion is disposed on the tire radial direction inner side relative to a tire radial direction outer side end of the bead core 1, and an upper end portion is disposed in a region located to range from 10 to 70% of a section height of the tire. Here, the section height of the tire refers to a height in the tire radial direction under no load while the tire is mounted on the prescribed rim and inflated with a predetermined pneumatic pressure. Further, the standard is an industrial standard, as described below, which is valid in an area where the tires are manufactured or used.

Furthermore, in the present invention, a reinforcing cord of the carcass ply 2 is composed of a polyester fiber and/or an aramid fiber. As the reinforcing cord of the carcass ply 2, a polyester fiber cord, an aramid fiber cord, or a hybrid cord of a polyester fiber cord and aramid fiber cord is used so that, since these fibers have a high strength and a high rigidity per weight, the strength of the tire is retained by less cords and rubbers, while the roundness of the tire is ensured, and an effect excellent for retaining the shape of the tire can be obtained. Specific examples of the polyester fiber may include polyethylene terephthalate (PET), polyethylene naphthalate (PEN), and polytrimethylene terephthalate (PTT). Above all, in the present invention, as the reinforcing cord of the carcass ply 2, PET, PEN, and the aramid fiber may be preferably used. Particularly, PEN has a rigid molecular structure so that the shape retention property of the tire can be enhanced.

Further, in the present invention, such a reinforcing cord of the carcass ply 2 is coated with an adhesive agent composition in which, on the basis of 100 parts by mass of solid content of a latex, 35 to 100 parts by mass of solid content of a thermosetting resin including a blocked isocyanate is formulated. An adhesive agent treatment is performed by one-bath treatment, thereby enabling the adhesive agent treatment to be performed in a conventional heat treatment facility, so that an increase in costs is suppressed while a high dynamic adhesion property (heat resistant adhesive property) required for the pneumatic safety tire can be ensured. Note that the one-bath treatment described herein refers to exclusively an adhesive agent treatment of cords, and, in the present invention, in spinning of an organic fiber filament constituting the reinforcing cord, a pretreatment using an epoxy compound and the like may be performed. If the content of the above thermosetting resin is too small, a dynamic adhesion property required for the pneumatic safety tire cannot be ensured so that a run-flat drum durability level is insufficient, and, if the content of the above thermosetting resin is too large, the adhesive agent composition is too cured and a fatigue property remarkably decreases so that a tire durability cannot be ensured regardless of bead structures of the tire, and, in either case, an expected effect of the present invention cannot be obtained.

In the present invention, the above adhesive agent composition is preferably formulated in the same solution. Thereby, an adhesive agent treatment in a usual facility for one bath is enabled. Moreover, in the above adhesive agent composition, the percentage of the blocked isocyanate in the thermosetting resin is preferably 45 to 90% by mass. If such percentage of the blocked isocyanate is too small, adhesion to fibers is insufficient, and, if such percentage of the blocked isocyanate is too large, fibers cure and a fatigue property deteriorates, and thus neither case is preferable. Moreover, examples of an isocyanate species for the blocked isocyanate may include diphenyl methane diisocyanate (MDI), toluene diisocyanate (TDI), hexamethylene diisocyanate (HDI), xylylene diisocyanate (XDI), and particularly MDI is effective for retaining the adhesive strength.

As the above adhesive agent composition, specifically, for example, an adhesive agent composition containing an RFL adhesive agent liquid containing resorcin, formaldehyde, and rubber latex, and further containing an emulsion-polymerized blocked isocyanate compound, and ammonia, in which the content of the emulsion-polymerized blocked isocyanate compound is 15 to 45% by mass may be preferably used.

In the formulation using the RFL adhesive agent liquid and the emulsion-polymerized blocked isocyanate compound, as a catalyst for the condensation reaction between resorcin and formaldehyde, only ammonia is used without using a metal catalyst, such as sodium hydroxide, and further, the content of the emulsion-polymerized blocked isocyanate compound is set in the above range so as to manufacture by one-bath treatment the adhesive agent composition which enables the reinforcing cord having an adhesion fatigue property and a heat resistant adhesive property in rubber.

In the present invention, ammonia is used as a reaction catalyst because a metal compound catalyst, such as sodium hydroxide, promotes curing of an RFL adhesive agent resin, and is unsuitable for ensuring the flexibility of an adhesive agent resin. Moreover, ammonia is used as a reaction catalyst because a metal compound catalyst is so strongly basic as to easily promote deterioration of a rubber or a cord. In contrast, since ammonia is weakly basic, a curing reaction proceeds at an appropriate rate. Thereby, the flexibility of the adhesive agent can be retained. Moreover, since ammonia can be removed from the system of an ammonia resol-based resin by vaporization, physical softening and rubber deterioration due to a base can be suppressed.

Meanwhile, the content of the emulsion-polymerized blocked isocyanate compound is set to 15 to 45% by mass because, when the content of the emulsion-polymerized blocked isocyanate compound is greater than 45% by mass, the adhesive agent composition cures although a sufficient adhesive strength is obtained, ensuring the workability during manufacture of the tire becomes difficult, and this is not preferable in view of costs. On the other hand, when the content of the emulsion-polymerized blocked isocyanate compound is less than 15% by mass, the affinity to an inactive cord, such as polyester, becomes insufficient, which makes it difficult to ensure the adhesive strength. The above content is preferably 20 to 40% by mass. Moreover, if the blocked isocyanate compound is emulsion polymerized, also an effect in which the blocked isocyanate compound does not precipitate during the adhesive agent treatment and the workability can be ensured can be obtained.

In the above adhesive agent composition, ammonia is preferably added at a rate of 0.5 to 5.0 mol to 1.0 mol of resorcin. If the amount of ammonia added to 1.0 mol of resorcin is less than 0.5 mol, an effect as a resorcin resin catalyst is insufficient, and an maturation reaction takes time, the maturation reaction fails to proceed sufficiently, and the adhesive property may not be ensured. Moreover, since the amount of the ammonia resol is small, the adhesive agent resin may cure. On the other hand, if the amount of added ammonia is greater than 5.0 mol, the reaction system is promoted, which may deteriorate the flexibility of the adhesive agent resin.

Moreover, in the present invention, the rubber latex is preferably a copolymer rubber latex of vinylpyridine, styrene, and butadiene, and more preferably a copolymer rubber latex having a double structure composed of two-stage polymerization of vinylpyridine, styrene, and butadiene.

The copolymer rubber latex having a double structure composed of two-stage polymerization of vinylpyridine, styrene, and butadiene is a copolymer rubber latex of vinylpyridine, styrene, and butadiene which can be obtained by (i) polymerizing a monomer mixture constituted by styrene content of 10 to 60% by mass, butadiene content of less than 60% by mass, and vinylpyridine content of 0.5 to 15% by mass, and then, (ii) polymerizing a monomer mixture constituted by styrene content of 10 to 40% by mass, butadiene content of 45 to 75% by mass, and vinylpyridine content of 5 to 20% by mass, in which the styrene content is less than the styrene content used for the polymerization in (i).

In the present invention, as the rubber latex, a core-shell type copolymer rubber latex of vinylpyridine, styrene, and butadiene which has a styrene-rich core is more preferably used. The core-shell type rubber latex having a styrene-rich core is used so that an adhesion deterioration rate of an RFL formulation containing an isocyanate which has a high crosslinking property and whose reaction easily proceeds can suppressed, and a heat resistant adhesive property in rubber can be favorably ensured.

In the present invention, a blocking agent dissociating temperature of the blocked isocyanate compound is preferably 150°C to 210°C. When an adhesive agent treatment of the organic fiber cord is performed, a step of drying treatment is usually performed at 150°C or higher. Accordingly, the blocking agent dissociating temperature of the blocked isocyanate compound in the adhesive agent liquid according to the present invention is set to 150°C or higher, and both the temperatures are set to 150°C or higher so that the adhesive agent composition can be inhibited from remaining behind at the center of the cord. As the result, the outside of the tire cord can be uniformly coated with the adhesive agent composition so that the heat resistant adhesive property in rubber can be further improved. When the blocking agent dissociating temperature of the blocked isocyanate compound is higher than 210°C, since the surface of the adhesive agent liquid dries first, then the inside of the adhesive agent composition dries later, multitude of resin scales which are called as "egg blister" may be generated. Thus, the dissociating temperature of a blocking agent of the blocked isocyanate compound is preferably 210°C or lower.

In the present invention, the RFL adhesive agent liquid is not particularly limited, and a known RFL adhesive agent liquid may be used. For example, provided that the molar ratio of the total amount of resorcin/formaldehyde is R/F, and the ratio of the total mass of resorcin and formaldehyde to the total mass of the solid of the rubber latex is RF/L, an RFL adhesive agent liquid satisfying the following expressions (1) and (2) may be preferably used:

$$1/2.3 \leq R/F \leq 1/1.1 \quad (1)$$

$$1/10 \leq RF/L \leq 1/4 \quad (2).$$

The adhesive agent treatment using the above adhesive agent composition can be performed in accordance with a conventional method, and is not particularly limited. Specifically, the adhesive agent treatment can be performed by employing at least an impregnation step of impregnating the cord with the above adhesive agent composition and a drying step of drying the obtained cord. For example, the cord fed out from an unwinding apparatus is dipped in the adhesive agent composition, the cord is impregnated with the adhesive agent composition, then, the cord is transferred to a drying zone to be dried, and next, the dried cord is made to pass through a heat set zone and a normalizing zone, subjected to a heat treatment, and wound after being cooled, so that the cord to which the adhesive agent treatment has been performed can be obtained.

A method of coating the cord with the adhesive agent composition is not particularly limited, and examples thereof may include a method of dipping a cord in an adhesive agent composition, and also include brush painting, casting, spraying, roll coating, and knife coating. In particular, if a method of dipping a cord in an adhesive agent composition is employed, it is preferable that the above adhesive agent composition of the present invention is diluted and the cord is impregnated therewith, and then the obtained organic fiber cord is dried. Thereby, the one-bath treatment enables a cord having an adhesion fatigue property and a heat resistant adhesive property in rubber.

The cord coated with the adhesive agent composition may be dried at a temperature of, for example, 150 to 210°C. As described above, the blocking agent dissociating temperature of the blocked isocyanate compound in the adhesive agent composition used in the present invention is preferably 150 to 210°C. The drying temperature is accordingly set to 150 to 210°C so that the adhesive agent composition is inhibited from remaining behind at the center of the cord, and the outside of the cord can be uniformly coated with the adhesive agent composition. Thereby, the heat resistant adhesive property in rubber can be favorably improved.

Moreover, in the adhesive agent treatment, the cord tension T during impregnation may be set to 0.3 g/d or lower, preferably 0.2 g/d or lower, and more preferably 0.1 g/d or lower. Further, in the heat treatment composed of a heat-setting and a normalizing, the treatment temperature may be set to 210 to 250°C, the treatment time to 30 to 120 seconds, and the cord tension to 0.05 to 1.20 g/d for each.

As described above, a method, in which a polyester cord obtained by performing the adhesive agent treatment using the above RFL-based adhesive agent composition to the above cord is embedded in an unvulcanized rubber to be vulcanized, or the like, enables a treat, in which the cord and the rubber are rigidly bonded to each other, and this is applied to the carcass ply so that the tire of the present invention can be obtained.

In the present invention, the carcass 2 is composed of at least one, for example, one to three, particularly, one to two carcass plies in which the plural reinforcing cords arranged in parallel with each other are coated with a coating rubber. In the present invention, if the two or more carcass plies 2 are provided, every reinforcing cord of the carcass plies 2 is composed of a polyester fiber or an aramid fiber, and is subjected to the above particular adhesive agent treatment.

Further, in the present invention, an adhesive strength of the reinforcing cord of the carcass ply 2 is preferably 12 N or more per cord, particularly 15 N or more per cord. The adhesive strength of the reinforcing cord of the carcass ply 2 falls within this range, thereby ensuring a sufficient durability against deflection and heat generation due to deflection deformation during run-flat running, which is preferable. Here, the above adhesive strength refers to a value measured by the below dynamic adhesion test.

Still further, in the present invention, an intermediate elongation of the reinforcing cord, which is taken out from a product tire, of the carcass ply in the crown portion under 66 N falls within preferably 3.5 to 6.5%, particularly 4.5 to 6.0% when the reinforcing cord of the carcass ply is composed of a polyester fiber, and 0.5 to 2.5% when the reinforcing cord of the carcass ply is composed of an aramid fiber. Such intermediate elongation of the reinforcing cord of the carcass ply falls within this range, thereby suppressing deflection deformation and heat generation during run-flat running and accordingly enabling improvement in travel distance, and an effect excellent for retaining the shape of the tire inflated with the inner pressure can be obtained.

Further, in the present invention, the carcass ply 2 is, as illustrated, folded back and wound up around the bead core 1 from the inside to the outside. This folded-back portion 2B of the carcass ply is, as illustrated, preferably located further on the side of the bead core 1 than a maximum thickness portion of the side reinforcing rubber 4. This is because the ply cord becomes hard to suffer compressive deformation, which can suppress fatigue of the ply cord and leads to decrease in weight of the tire.

More preferably, a height $H_E$ of the folded-back portion 2B of the carcass ply from the center of the bead core 1 is 30 mm or less, particularly in the range of 5 to 25 mm, and, for example, as illustrated in FIG. 1(b), a height of a folded-back end of the carcass ply 2 is set to be low. If the folded-back portion 2B of the carcass ply is set to be located lower on the side of the bead core 1 than the maximum thickness portion of the side reinforcing rubber 4, and, particularly, the height $H_E$ thereof is 30 mm or less, a structure in which an organic fiber is not provided in the vicinity of a contact point between a rim flange and the tire to which compression input is applied during application of loads is made, which enables control of tire performance, such as steering stability, regardless of the fatigue property of the cord. If the height of the folded-back portion 2B of the carcass ply is too high, compression input applies to a rim flange portion so that an adjacent end of the reinforcing cord becomes fatigued, which acts as a rupture nucleus causing peeling of a rubber layer, and the like, and may prevent the durability of the tire during normal running from being sufficiently improved.

Moreover, in the present invention, also preferably, a height $H_F$ of the bead filler 5 is 15 mm or less, particularly in the range of 10 mm or less. For example, as illustrated in FIG. 1(c), the bead filler 5 has a small shape so that the folded-back portion 2B of the carcass cord is just along the inner surface of the tire, and accordingly, when a flexural input using as a fulcrum point the contact point between the rim flange and the tire is applied to the vicinity of the bead portion during application of loads, the carcass cord exists outside the flexural deformation, and not compression input but only tension input is applied to the cord. Thereby, promotion of decrease in strength of the carcass cord of the folded-back portion due to cyclical flexural deformation can be suppressed, and the occurrence of failure due to cyclical flexural deformation can be suppressed, which enables control of tire performance, such as steering stability, regardless of the fatigue property of the cord, and consequently, even a carcass cord having a high rigidity ensures product durability and an advantage of improvement in steering stability can be enjoyed.

In the present invention, the height of the bead filler 5 is set to 15 mm or less because, since the shape and the value of the rim flange are standardized, setting the height of the bead filler 5 to 15 mm or less regardless of the size enables the carcass cord to avoid a portion to which compression input is applied. If the height of the bead filler 5 is 15 mm or less, compression input may be applied to the verge of a ply end due to the flexural rigidity around the bead, inner pressure conditions, input or the like, and thus, by setting the height of the bead filler 5 preferably to 10 mm or less, compression input can be assuredly avoided regardless of types of the tire. The lower limit of the height of the bead filler 5 is not particularly limited, and for example, may also be 0 mm (no bead filler rubber).

Here, in the present invention, the height of the carcass ply 2 and the bead filler 5 refers to the height in the tire radial direction under no load when the tire is mounted on the prescribed rim and is inflated with a predetermined pneumatic pressure. Meanwhile, the prescribed rim refers to a rim defined in the following standards, and the predetermined pneumatic pressure refers to a pneumatic pressure defined corresponding to the maximum load capacity in the below standards. The standard is an industrial standard which is valid in an area where the tire is manufactured or used, and, for example, in the United States of America, the standard is "Year Book" by The Tire and Rim Association Inc.; in Europe, the standard is "Standards Manual" by The European Tire and Rim Technical Organization; and in Japan, the standard is JATMA Year book by Japan Automobile Tyre Manufacturers Association.

The belt layers 3 are composed of a rubberized layer in which cords extend obliquely by 15° to 35° with respect to a tire equatorial plane, preferably a rubberized steel cord layer, and the belt layers 3 of two layers are usually laminated such that the cords constituting the belt layers 3 cross with each other with respect to the equatorial plane so as to constitute a belt. In the example as illustrated, the belt is composed of two belt layers 3, whereas, in the tire of the present invention, the number of the belt layers constituting the belt is not limited to this. Further, although unillustrated, a belt reinforcing layer (cap layer) covering the entirety of the belt and a pair of belt reinforcing layers (layered layer) covering only both ends of the cap layer which are composed of rubberized layers in which cords are arrayed substantially in parallel with respect to the tire circumferential direction may be disposed on the tire radial direction outer side of the belt layer 3.

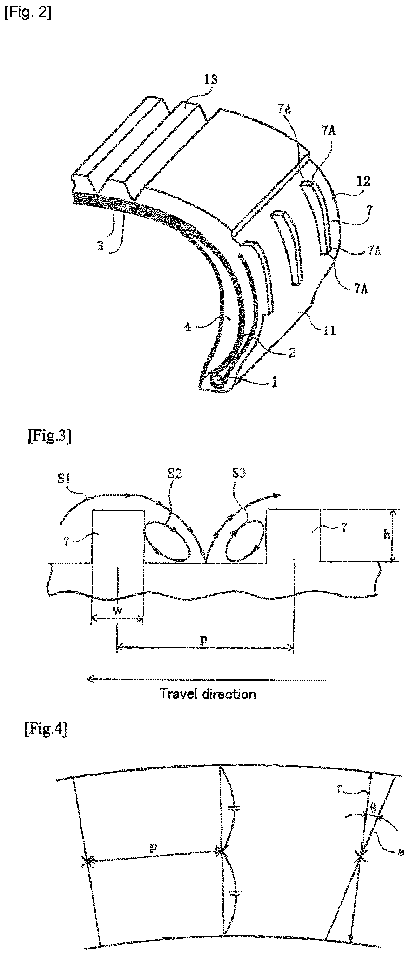

Moreover, in the tire of the present invention, as illustrated in FIG. 2, protrusion portions for turbulent flow generation 7 may also be provided on at least a part of a tire surface other than a ground contact portion and a portion contacting with the rim while the tire is mounted thereon, preferably on a tire side portion as illustrated. Providing such protrusion portions for turbulent flow generation 7 improves an effect of dissipating heat from the tire surface, suppresses an increase in temperature of the tire during run-flat running, and enables maintenance of the temperature around the carcass 2 around a temperature at which fiber cords constituting the carcass 2 show a high thermal shrinkage stress. As the result, a deflection suppressing effect during run-flat running can be obtained, and further improving temporary lifetime of the run-flat tire is enabled.

The protrusion portions for turbulent flow generation 7 are provided on the tire surface so that the air normally flowing on the surface in the tire circumferential direction in accordance with rotation of the tire turns into a turbulent flow at a portion where the air contacts the protrusion portions for turbulent flow generation 7 and flows on the tire surface, thereby performing a positive heat exchange with the tire surface, and promoting heat dissipation from the tire. Here, with reference to FIG. 3, the generation state of the turbulent flow caused by the protrusion portions for turbulent flow generation 7 in the present invention will be described. FIG. 3 is a partial sectional view illustrating the vicinity of the surface of the run-flat tire of the present invention. As illustrated, during running, an airflow S1 in contact with the portion of the tire surface at which the protrusion portions for turbulent flow generation 7 are not formed is peeled off from the tire surface at the protrusion portion for turbulent flow generation 7 in accordance with rotation of the tire, and climbs over the protrusion portion for turbulent flow generation 7. At this time, a portion (region) S2 at which the airflow remains is generated on a rear surface side of the protrusion portion for turbulent flow generation 7. Then, the airflow S1 bounces off the tire surface between this protrusion portion for turbulent flow generation 7 and the following protrusion portion for turbulent flow generation 7, and is again peeled off from the tire surface by the following protrusion portion for turbulent flow generation 7. At this time also, a portion (region) S3 at which the airflow remains is generated on a rear surface side of the following protrusion portion for turbulent flow generation 7.

At this time, to improve the heat dissipation effect of the tire, the rate of the airflow S1 in a region with which the airflow S1 that has turned into a turbulent flow as described above comes into contact is advantageously increased. From such a point of view, in the present invention, as illustrated, the plurality of protrusion portions for turbulent flow generation 7 are arranged in the tire circumferential direction, and provided that a distance between the protrusion portions for turbulent flow generation 7 which are adjacent to each other at respective points thereof equally dividing a width thereof w at the longitudinal-direction center thereof is a pitch p, and a height of the protrusion portions for turbulent flow generation 7 is h, the protrusion portions for turbulent flow generation 7 are preferably arranged such that relations of $1.0 \leq p/h \leq 50.0$ and $1.0 \leq (p-w)/w \leq 100.0$ are satisfied (see FIGS. 3, 4).

If a value of p/h is less than 1.0, the airflow does not flow onto the tire surface sandwiched between the protrusion portions for turbulent flow generation 7 which are adjacent to each other, on the other hand, if the value of p/h is more than 50.0, a region on which an influence of the turbulent flow fails to exert is generated, and, in either case, a heat dissipation efficiency at a portion provided with the protrusion portion for turbulent flow generation 7 is similar to that at a portion not provided with the same. The value of p/h is more preferably $2.0 \leq p/h \leq 24.0$, and still more preferably $10.0 \leq p/h \leq 20.0$.

Moreover, in the present invention, (p-w)/w indicates a ratio of the width w of the protrusion portions for turbulent flow generation 7 to the pitch p, and if this value is small, this means that the ratio of the area of the protrusion portions for turbulent flow generation 7 to a heat dissipation surface increases, in other words, the area of the heat dissipation surface decreases. Thus, if this value of (p-w)/w is less than 1, the area of the heat dissipation surface is too small and an effect of sufficient improvement in heat dissipation efficiency cannot be expected, and further, an increase in heat generation in the rubber due to an increase in volume of the rubber is feared. On the other hand, if the value of (p-w)/w is more than 100.0, the width w relative to the pitch p is too small so that a sufficient rigidity against the airflow S1 flowing toward and coming into contact with the protrusion portions for turbulent flow generation 7 cannot be maintained, and the role as the protrusion portions for turbulent flow generation 7 may be insufficient. The value of (p-w)/w is preferably $4.0 \leq (p-w)/w \leq 39.0$.

Further, in the tire of the present invention, the height h of the protrusion portions for turbulent flow generation 7 and the width w preferably satisfy $0.5 \text{ mm} \leq h \leq 7 \text{ mm}$ and $0.3 \text{ mm} \leq w \leq 4 \text{ mm}$, respectively. If the height h is more than 7 mm and the width w is more than 4 mm, the volume of the protrusion portions for turbulent flow generation 7 increases so that heat generation in the protrusion portions for turbulent flow generation 7 increases, and the area of the surface covered by the protrusion portions for turbulent flow generation 7 increases so that heat may be accumulated on the rubber surface. Moreover, if the h is less than 0.5 mm and the w is less than 0.3 mm, in the manner as described above, the rigidity required for the protrusion portions for turbulent flow generation 7 cannot be maintained so that the heat dissipation effect may not be sufficiently obtained.

Moreover, as schematically illustrated in FIG. 4, in the tire of the present invention, the protrusion portions for turbulent flow generation 7 are preferably arranged such that an angle θ formed between a longitudinal direction thereof a and the tire radial direction r is 70° or less. The airflow over the tire surface on which the protrusion portions for turbulent flow generation 7 are arranged is directed slightly toward the tire radial direction outer side due to the centrifugal force caused by rotation of the tire. Then, if the angle θ formed by the longitudinal direction a of the protrusion portions for turbulent flow generation 7 with respect to the tire radial direction r is 70° or less, an inflow of the air to the tire surface decreases the portions S2, S3 at which the air remains generated behind the protrusion portions for turbulent flow generation 7, thereby enabling improvement in heat dissipation efficiency. Note that the longitudinal direction a of the protrusion portions for turbulent flow generation 7 may form with the tire radial direction r the angle within the sum of 140° composed of 70° on one side and 70° on the other side.

In this case, on the surface of the rotating tire, depending on positions thereon in the tire radial direction r, the airflow rate is different. Thus, if the plurality of protrusion portions for turbulent flow generation 7 are provided in the tire radial direction, the above angle θ preferably varies depending on positions of the corresponding protrusion portion for turbulent flow generation 7 in the tire radial direction.

In the present invention, the shape of the protrusion portions for turbulent flow generation 7 is not particularly limited, but preferably, as illustrated, the protrusion portions for turbulent flow generation 7 have apex portions 7A at least inward in the tire radial direction. That is, the protrusion portions for turbulent flow generation 7 have a shape including four apex portions 7A, as illustrated in FIG. 2, and also may have a shape in which the portions corresponding to the apex portions 7A are each curved surface, and include apex portions 7A at least inward in the tire radial direction so that a three-dimensional airflow is generated around these apex portions 7A, thereby further improving the heat dissipation effect.

Moreover, in the present invention, the protrusion portions for turbulent flow generation 7 are also preferably divided in the longitudinal direction. If the protrusion portions for turbulent flow generation 7 are divided in the longitudinal direction, the portions S2, S3 at which the air remains generated behind the protrusion portions for turbulent flow generation 7 during rotation of the tire are reduced so that balanced heat dissipation over the entirety of the portions provided with the protrusion portions for turbulent flow generation 7 can be achieved. Note that the number of division of the protrusion portions for turbulent flow generation 7 is not particularly limited and may be optionally selected.

Further, in the tire of the present invention, when the plurality of protrusion portions for turbulent flow generation 7 are provided in each of the tire circumferential direction and tire radial direction, frequency of arrangement of the protrusion portions for turbulent flow generation 7 in the tire circumferential direction preferably varies depending on positions in the tire radial direction. On the surface of the rotating tire, depending on positions in the radial direction thereof, the airflow rate is different. Meanwhile, the heat dissipation efficiency depends on the rate of the air flowing over the tire surface. Thus, the plurality of protrusion portions for turbulent flow generation 7 are provided in each of the tire circumferential direction and tire radial direction, and frequency of arrangement, that is, the number of arrangement, of the protrusion portions for turbulent flow generation 7 in the tire circumferential direction is made to vary depending on the tire radial direction so that unevenness of the heat dissipation efficiency due to difference in positions on the tire surface in the tire radial direction can be overcome.

Moreover, for example, in the tire of the present invention, a tread pattern is formed, as appropriate, on the surface of the tread portion 13, and an inner liner (unillustrated) is formed on the innermost layer. Further, in the tire of the present invention, as a gas to be filled in the tire, a normal air or an air in which oxygen partial pressure is changed, or an inert gas, such as nitrogen, may be used.

EXAMPLES

The present invention will be described below further in detail by using examples.

Two yarn bound bodies having 1670 dtex which are a commonly used multifilament of polyethylene terephthalate (PET) were twisted with a twist number of 40 per 10 cm of length for first and final twists so that a PET cord having a structure represented by 1670 dtex/2 and the twist number of $40 \times 40$ (twists/10 cm) was obtained. In a similar manner, a cord of polyparaphenylene terephthalamide (aramid, Kevlar) (manufactured by Du Pont-TORAY Co., LTD.) having a structure represented by 1100 dtex/2 and the twist number of $45 \times 45$ (twists/10 cm) was prepared.

In accordance with the description in the below tables, the twisted cord as obtained above was dipped in a one-bath epoxy-based adhesive agent and subjected to heat treatment of 120 seconds in total in a dry zone at 160°C under tension of 2.0 kg per cord for 60 seconds and in a hot zone at 240°C under tension of 2.0 kg per cord for 60 seconds so that a cord to which the adhesive agent had been applied was prepared. Moreover, the tension in the hot zone which is the last step of a dipping treatment process was slightly adjusted such that an intermediate elongation of the cord under load of 66 N was 4.3%. Note that, in the below tables, the formulation was adjusted at the below ratio in such a manner as to finally prepare 20% by mass of aqueous solution, which was used as a one-bath solution. Moreover, a blocked isocyanate was used in such a manner as to be formulated with an RFL, matured, and then added just before use.

(Dynamic adhesion test)

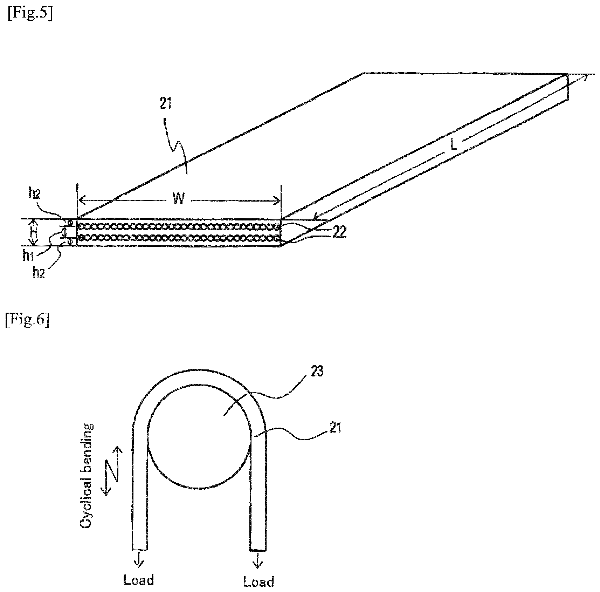

FIG. 5 is a perspective view illustrating a rubber test piece used in a dynamic adhesion test.

As illustrated, polyester cords 22 for reinforcing the tire in each example and comparative example were embedded in a rubber matrix such that cord layers are parallel with each other, to prepare each rubber test piece 21 having a width W of 50 mm, a length L of 500 mm, and a height H of 5.5 mm. A placement density of the cords was 50 pieces/50 mm, a distance between cords $h_1$ was 2.5 mm, and a distance $h_2$ from the center of the cord to the surface was 1.5 mm. As illustrated in FIG. 6, each obtained rubber test piece 21 was hung on a pulley 23 ($\varphi$ 50 mm), a load of 50 kg/inch was applied in the axial direction of the cord, a tension and a compressive force were cyclically applied at 100 rpm for 300,000 times. The above test was performed in a constant temperature bath capable of constantly retaining an atmospheric temperature, and dynamic adhesion properties at a room temperature and at a high temperature of 100°C were tested. After the test, a sample was cooled, and then a pull-up adhesive property (N/cord) of the cord on the pulling side was measured to obtain the dynamic adhesion property. Here, the rubber matrix used for preparing the sample is composed of 60.0 parts by mass of natural rubber, 40.0 parts by mass of styrene-butadiene rubber (SBR), 45.0 parts by mass of carbon black (HAF), 2.0 parts by mass of softening agent (spindle oil), 3.0 parts by mass of zinc oxide, 1.0 parts by mass of antioxidant (Nocrac 6C, manufactured by Ouchi Shinko Chemical Industry Co., Ltd.), 0.8 parts by mass of vulcanization accelerator (Nocceler NS, manufactured by Ouchi Shinko Chemical Industry Co., Ltd.), 1.0 parts by mass of stearic acid, and 3.0 parts by mass of sulfur. The tension rate during the adhesion test was set to 300 mm/min. The rubber test piece was prepared under vulcanization condition of 160°C $\times$ 20 minutes. As the result, the dynamic adhesion property of 15 (N/cord) or more was indicated as ⊚, 12 to 15 (N/cord) as ○, and less than 12 (N/cord) as ×.

The cord as obtained above was coated with a rubber so that a rubber-cord composite body of each example and comparative example was obtained. The obtained rubber-cord composite was used, a treat having a placement density of the cords of 50 pieces/50 mm was prepared, and this was applied to a carcass ply so that a pneumatic safety tire of a tire having a tire size of 225/45R17 was manufactured.

This sample tire included, as a skeleton, a carcass having one carcass ply extending between a pair of bead cores embedded in a corresponding pair of bead portions, and, on a tire radial direction outer side of the carcass, a belt of two layers (material: steel) crossing with each other at an angle of $\pm 40°$ with respect to the tire circumferential direction. Moreover, a side reinforcing rubber was included on a tire width direction inner side of the carcass in a side wall portion, a bead filler was arranged on a tire radial direction outer side of the bead core, and a rubber chafer was arranged in a tire width direction outer side of the bead filler and the bead core. The area S1 of the side reinforcing rubber, the area S2 of the bead filler, and the area S3 of the rubber chafer in a cross section in a tire width direction were adjusted in such a manner as to satisfy the conditions indicated in the below tables so that the sample tire of each example and comparative example was manufactured. Note that, in example 6, the bead filler was not provided. Moreover, an intermediate elongation of the reinforcing cord of the carcass ply in a crown portion of each sample tire (intermediate elongation of belt lower portion) was a numerical value, in which the reinforcing cord centered on a belt center portion was taken out from the tire and the value was measured under conditions of a sample length of 125 mm and a tension rate of 300 mm/min by Autograph manufactured by Shimadzu Corporation, and a degree of elongation under 66 N was indicated in percentage (%).

(Run-flat (RF) drum test)

Each sample tire was assembled with the standard rim defined in JATMA, and then mounted to a drum testing machine, a valve core was pulled out to remove the inner pressure, a run-flat durability test was performed under load of 65% of the maximum load defined in JATMA, and a travel distance till occurrence of failure was measured. The results were indicated in terms of index setting example 1 as 100. As this numerical value is greater, it is indicated that the travel distance is longer and run-flat durability is excellent.

(Drum durability test)

Each sample tire was assembled with the standard rim defined in JATMA, and then mounted to the drum testing machine, inflated with the inner pressure of 100 kPa, applied with the maximum load defined in JATMA, and made to run on the drum for 20000 km. After the test, each sample tire was dissected, a remaining strength of the carcass ply was measured, and a strength retention percentage was evaluated on the basis of the state in which each sample tire was new. The results were indicated in terms of index setting the strength retention percentage of example 1 as 100. As the numerical value is greater, it is indicated that the drum durability is excellent. These results are also indicated in the below tables.

Table 1

| | | | Comparative example 1 | Comparative example 2 | Comparative example 3 | Comparative example 4 | Example 1 | Example 2 |
|---|---|---|---|---|---|---|---|---|
| Dipping solution formulation (solid content mass ratio) | Latex [*3] | | 100 | 100 | 100 | 100 | 100 | 100 |
| | Thermosetting resin | Resorcin | 12 | 12 | 12 | 12 | 12 | 12 |
| | | Formalin | 4 | 4 | 4 | 4 | 4 | 4 |
| | | Caustic soda | 0.2 | 0.2 | 0.2 | 0.2 | 0.2 | 0.2 |
| | | Ammonia | 1.0 | 1.0 | 1.0 | 1.0 | 1.0 | 1.0 |
| | | Chlorophenol | 50 | 0 | 0 | 0 | 0 | 0 |
| | | Blocked isocyanate compound[*2] | 0 | 50 | 50 | 50 | 50 | 50 |
| Mass % of thermosetting resin relative to 100% by mass of latex | | | 0 | 67.2 | 67.2 | 67.2 | 67.2 | 67.2 |
| Mass % of blocked isocyanate resin in thermosetting resin | | | 0 | 74.4 | 74.4 | 74.4 | 74.4 | 74.4 |
| Cord | Type | | PET 1670/2 40×40 | PET 1670/2 40×40 | PET 1670/2 40×40 | PET 1670/2 40×40 | PET 1670/2 40×40 | PET 1670/2 40×40 |
| Tire bead structure | Expression (3): (S2+S3)/S1 | | 1.00 | 0.05 | 0.50 | 0.05 | 0.50 | 0.20 |
| | Expression (4): S2/(S2+S3) | | 0.50 | 0.95 | 0.95 | 0.50 | 0.50 | 0.20 |
| | Carcass folded-back height[*1] | | 60 mm | 60 mm | 60 mm | 20 mm | 20 mm | 20 mm |
| | Bead filler height | | 50 mm | 50 mm | 50 mm | 10 mm | 10 mm | 10 mm |
| Intermediate elongation of belt lower portion in tire (%) | | | 4.5 | 4.5 | 4.5 | 4.5 | 4.5 | 4.5 |
| Dynamic adhesion property | | | × | ○ | ○ | ○ | ○ | ○ |
| Drum evaluation result | RFT drum | | 70 | 80 | 100 | 80 | 100 | 110 |
| | Durable drum | | 100 | 95 | 97 | 99 | 100 | 102 |

*1) Height $H_E$ of the folded-back portion of the carcass ply from the center of the bead core
*2) Blocked isocyanate: manufactured by DKS Co., Ltd. ELASTRON BN69
*3) Manufactured by Nippon A&L Inc., PYRATEX

EP 2 946 947 B1

Table 2

| | | | | Example 3 | Example 4 | Comparative example 5 | Comparative example 6 | Comparative Example 7 | Example 5 | Example 6 |
|---|---|---|---|---|---|---|---|---|---|---|
| Dipping solution formulation (solid content mass ratio) | Latex | | | 100 | 100 | 100 | 100 | 100 | 100 | 100 |
| | Thermo setting resin | Resorcin | | 16 | 8 | 12 | 24 | 24 | 12 | 12 |
| | | Formalin | | 6 | 3 | 4 | 8 | 8 | 4 | 4 |
| | | Caustic soda | | 0.3 | 0.1 | 0.2 | 0.4 | 0.4 | 0.2 | 0.2 |
| | | Ammonia | | 1.5 | 0.5 | 1.0 | 2.0 | 2.0 | 1.0 | 1.0 |
| | | Chlorophenol | | 0 | 0 | 0 | 0 | 0 | 0 | 0 |
| | | Blocked isocyanate compound | | 70 | 30 | 15 | 90 | 90 | 50 | 50 |
| Mass % of thermosetting resin relative to 100% by mass of latex | | | | 93.8 | 41.6 | 32.2 | 124.4 | 124.4 | 67.2 | 67.2 |
| Mass % of blocked isocyanate resin in thermosetting resin | | | | 74.6 | 72.1 | 46.6 | 72.3 | 72.3 | 74.4 | 74.4 |
| Cord | Type | | | PET 1670/2 40×40 | PET 1670/2 40×40 | PET 1670/2 40×40 | PET 1670/2 40×40 | PET 1670/2 40×40 | aramid 1100/2 45×45 | PET 1670/2 40×40 |
| | Expression (3) : (S2+S3)/S1 | | | 0.50 | 0.30 | 0.05 | 0.50 | 0.05 | 0.50 | 1.50 |
| | Expression (4) : S2/(S2+S3) | | | 0.50 | 0.50 | 0.50 | 0.20 | 0.95 | 0.20 | 0.00 |
| Tire bead structure | Carcass folded-back height*1 | | | 20 mm | 20 mm | 20 mm | 20 mm | 60 mm | 20 mm | 30 mm |
| | Bead filler height | | | 10 mm | 10 mm | 10 mm | 10 mm | 50 mm | 10 mm | 10 mm |
| Intermediate elongation of belt lowe portion in tire (%) | | | | 4.5 | 4.5 | 4.5 | 4.5 | 4.5 | 1.5 | 4.5 |
| Dynamic adhesion property | | | | ◎ | ○ | × | ◎ | ◎ | ◎ | ○ |
| Drum evaluation result | RFT drum | | | 115 | 100 | 95 | 115 | 85 | 110 | 109 |
| | Durable drum | | | 102 | 100 | 100 | 90 | 90 | 100 | 114 |

As indicated in the above tables, the sample tire of examples 1, 3 and 4, in which the reinforcing cord of the carcass ply is made of a polyester fiber or a aramid fiber and subjected to a predetermined adhesion treatment, and, in the cross section in the tire width direction, the ratios of the areas of the side reinforcing rubber, bead filler, and rubber chafer are set to satisfy the predetermined relations defined by the expressions (3) and (4), has been confirmed to have improved, as a whole, in adhesion property, run-flat durability, and drum durability in comparison with the sample tires of comparative examples which fail to satisfy the above relations. In contrast to this, in comparative example 5 in which the percentage of the thermosetting resin including an isocyanate compound is too small, a dynamic adhesion property required for a pneumatic safety tire was not obtained, and the run-flat drum level was insufficient. Moreover, in comparative example 6 in which the percentage of the thermosetting resin including an isocyanate compound is too large, the adhesive agent composition was too cured, and accordingly a fatigue property remarkably decreased and a sufficient tire durability could not be obtained.

DESCRIPTION OF SYMBOLS

1 bead core, 2 carcass (carcass ply), 3 belt layer, 4 side reinforcing rubber, 5 bead filler, 6 rubber chafer, 7 protrusion portion for turbulent flow generation, 7A apex portion, 11 bead portion, 12 side wall portion, 13 tread portion

## Claims

1. A pneumatic safety tire comprising: as a skeleton, a carcass (2) having at least one carcass ply extending between a pair of bead cores (1) embedded in a corresponding pair of bead portions (11); and a side reinforcing rubber (4) on a tire width direction inner side of the carcass (2) in a side wall portion (12); wherein a reinforcing cord of the carcass ply is composed of a polyester fiber and/or an aramid fiber, and coated with an adhesive agent composition in which, on the basis of 100 parts by mass of solid content of a latex, 35 to 100 parts by mass of solid content of a thermosetting resin including a blocked isocyanate is formulated, **characterised in that**, in a cross section in a tire width direction, provided that the area of the side reinforcing rubber (4) is S1, the area of the bead filler (5) arranged on a tire radial direction outer side of the bead core (1) is S2, and the area of a rubber chafer (6) arranged on a tire width direction outer side of the bead filler (5) and the bead core is S3, the following expressions (III) and (IV) are satisfied:

$$0.20 \leq (S2 + S3)/S1 \leq 1.50 \quad (III)$$

$$0.5 \leq S2/(S2 + S3) \leq 0.80 \quad (IV).$$

2. The pneumatic safety tire according to claim 1, wherein an adhesive strength of the reinforcing cord of the carcass ply is 12 N or more per cord.

3. The pneumatic safety tire according to claim 1, wherein the carcass ply is folded back around the bead core (1) from the inside to the outside of the tire, and a folded-back end portion of the carcass ply is located on a tire radial direction inner side with respect to a maximum thickness portion of the side reinforcing rubber (4).

4. The pneumatic safety tire according to claim 1, wherein a height of the bead filler (5) is 15 mm or less.

5. The pneumatic safety tire according to claim 1, wherein the carcass ply is folded back around the bead core (1) from the inside to the outside of the tire, and a folded-back end portion of the carcass ply is located at a height of 30 mm or less from a center of the bead core (1).

6. The pneumatic safety tire according to claim 1, wherein an intermediate elongation of the reinforcing cord, which is taken out from a product tire, of the carcass ply in a crown portion under 66 N falls within 3.5 to 6.5%.

7. The pneumatic safety tire according to claim 1, wherein the reinforcing cord of the carcass ply is composed of a polyester fiber, and an intermediate elongation of the reinforcing cord, which is taken out from a product tire, of the carcass ply in a crown portion under 66 N falls within 3.5 to 6.5%.

8. The pneumatic safety tire according to claim 1, wherein the reinforcing cord of the carcass ply is composed of an aramid fiber, and an intermediate elongation of the reinforcing cord, which is taken out from a product tire, of the carcass ply in a crown portion under 66 N falls within 0.5 to 2.5%.

9. The pneumatic safety tire according to claim 1, wherein the adhesive agent composition is formulated in the same solution.

10. The pneumatic safety tire according to claim 1, wherein the percentage of the blocked isocyanate in the thermosetting resin is 45 to 90% by mass.

**Patentansprüche**

1. Luftsicherheitsreifen, umfassend: eine Karkasse (2) mit mindestens einer Karkassenlage, die sich zwischen einem Paar von Wulstkernen (1), die in einem entsprechenden Paar von Wulstabschnitten (11) eingebettet sind, erstreckt, als Skelett; und einem Seitenverstärkungsgummi (4) auf einer Reifenbreitenrichtungsinnenseite der Karkasse (2) in einem Seitenwandabschnitt (12);
wobei ein Verstärkungscord der Karkassenlage aus einer Polyesterfaser und/oder einer Aramidfaser besteht, und mit einer Haftmittelzusammensetzung beschichtet ist, in welcher auf der Basis von 100 Massenteilen an Feststoffgehalt eines Latex 35 bis 100 Massenteile an Feststoffgehalt eines duroplastischen Harzes, beinhaltend ein blockiertes Isocyanat, formuliert ist, **dadurch gekennzeichnet dass**, in einem Querschnitt in einer Reifenbreitenrichtung, vorausgesetzt, dass der Bereich des Seitenverstärkungsgummis (4) S1 ist, der an einer Reifenradialrichtungsaußenseite des Wulstkerns (1) angeordnete Bereich des Wulstfüllstoffs (5) S2 ist und der auf einer Reifenbreitenrichtungsaußenseite des Wulstfüllstoffs (5) angeordnete Bereich eines Gummiwulstbands (6) und des Wulstkerns S3 ist, die folgenden Ausdrücke (III) und (IV) erfüllt sind:

$$0{,}20 \leq (S2 + S3)/S1 \leq 1{,}50 \text{ (III)}$$

$$0{,}5 \leq S2/(S2 + S3) \leq 0{,}80 \text{ (IV)}.$$

2. Luftsicherheitsreifen nach Anspruch 1, wobei eine Haftfestigkeit des Verstärkungscords der Karkassenlage 12 N oder mehr pro Cord beträgt.

3. Luftsicherheitsreifen nach Anspruch 1, wobei die Karkassenlage von der Innenseite um den Wulstkern (1) herum zur Außenseite des Reifens zurückgefaltet ist und ein zurückgefalteter Endabschnitt der Karkassenlage sich in Bezug auf einen Abschnitt maximaler Dicke des Seitenverstärkungsgummis (4) auf einer Reifenradialrichtungsinnenseite befindet.

4. Luftsicherheitsreifen nach Anspruch 1, wobei eine Höhe des Wulstfüllstoffs (5) 15 mm oder weniger beträgt.

5. Luftsicherheitsreifen nach Anspruch 1, wobei die Karkassenlage von der Innenseite um den Wulstkern (1) herum zur Außenseite des Reifens zurückgefaltet ist und ein zurückgefalteter Endabschnitt der Karkassenlage sich bei einer Höhe von 30 mm oder weniger von einem Mittelpunkt des Wulstkerns (1) befindet.

6. Luftsicherheitsreifen nach Anspruch 1, wobei eine mittlere Dehnung des Verstärkungscords der Karkassenlage, welcher aus einem Produktreifen herausgenommen wird, in einem Kopfabschnitt unter 66 N innerhalb des Bereichs von 3,5 bis 6,5 % fällt.

7. Luftsicherheitsreifen nach Anspruch 1, wobei der Verstärkungscord der Karkassenlage aus einer Polyesterfaser besteht, und eine mittlere Dehnung des Verstärkungscords der Karkassenlage, welcher aus einem Produktreifen herausgenommen wird, in einem Kopfabschnitt unter 66 N innerhalb des Bereichs von 3,5 bis 6,5 % fällt.

8. Luftsicherheitsreifen nach Anspruch 1, wobei der Verstärkungscord der Karkassenlage aus einer Aramidfaser besteht, und eine mittlere Dehnung des Verstärkungscords der Karkassenlage, welcher aus einem Produktreifen herausgenommen wird, in einem Kopfabschnitt unter 66 N innerhalb des Bereichs von 0,5 bis 2,5 % fällt.

9. Luftsicherheitsreifen nach Anspruch 1, wobei die Haftmittelzusammensetzung in der gleichen Lösung formuliert ist.

10. Luftsicherheitsreifen nach Anspruch 1, wobei der Prozentsatz des blockierten Isocyanats in dem duroplastischen Harz 45 bis 90 Massen-% beträgt.

**Revendications**

1. Bandage pneumatique de sécurité comprenant : en tant que squelette, une carcasse (2) ayant au moins une nappe de carcasse s'étendant entre une paire de tringles de talon (1) intégrées dans une paire correspondante de parties de talon (11) ; et un caoutchouc de renfort latéral (4) sur un côté interne dans la direction de largeur de bandage de la carcasse (2) dans une partie de paroi latérale (12) ;
dans lequel un câble de renfort de la nappe de carcasse est composé d'une fibre polyester et/ou d'une fibre aramide et revêtu d'une composition d'agent adhésif dans laquelle, sur la base de 100 parties en masse de la teneur en solides d'un latex, 35 à 100 parties en masse de la teneur en solides d'une résine thermodurcissable incluant un isocyanate bloqué sont formulées, **caractérisé en ce que**,
dans une section transversale dans une direction de largeur de bandage, pour autant que l'aire du caoutchouc de renfort latéral (4) soit S1, que l'aire du bourrage sur tringle (5) agencé sur un côté externe dans la direction radiale de bandage de la tringle de talon (1) soit S2 et que l'aire d'une bandelette talon de caoutchouc (6) agencée sur un côté externe dans la direction de largeur de bandage du bourrage sur tringle (5) et la tringle de talon soit S3, les expressions suivantes (III) et (IV) sont satisfaites :

$$0,20 \leq (S2 + S3)/S1 \leq 1,50 \ (III)$$

$$0,5 \leq S2/(S2 + S3) \leq 0,80 \ (IV).$$

2. Bandage pneumatique de sécurité selon la revendication 1, dans lequel la résistance adhésive du câble de renfort de la nappe de carcasse est de 12 N ou plus par câble.

3. Bandage pneumatique de sécurité selon la revendication 1, dans lequel la nappe de carcasse est repliée autour de la tringle de talon (1) de l'intérieur vers l'extérieur du bandage, et une partie d'extrémité arrière repliée de la nappe de carcasse est située sur un côté interne dans la direction radiale de bandage par rapport à une partie d'épaisseur maximale du caoutchouc de renfort latéral (4).

4. Bandage pneumatique de sécurité selon la revendication 1, dans lequel une hauteur du bourrage sur tringle (5) est de 15 mm ou moins.

5. Bandage pneumatique de sécurité selon la revendication 1, dans lequel la nappe de carcasse est repliée autour de la tringle de talon (1) de l'intérieur vers l'extérieur du bandage, et une partie d'extrémité arrière repliée de la nappe de carcasse est située à une hauteur de 30 mm ou moins à partir d'un centre de la tringle de talon (1).

6. Bandage pneumatique de sécurité selon la revendication 1, dans lequel un allongement intermédiaire du câble de renfort, qui est pris à partir d'un bandage produit, de la nappe de carcasse dans une partie de couronne sous 66 N descend à une valeur allant de 3,5 à 6,5 %.

7. Bandage pneumatique de sécurité selon la revendication 1, dans lequel le câble de renfort de la nappe de carcasse est composé d'une fibre polyester et un allongement intermédiaire du câble de renfort, qui est pris à partir d'un bandage produit, de la nappe de carcasse dans une partie de couronne sous 66 N descend à une valeur allant de 3,5 à 6,5 %.

8. Bandage pneumatique de sécurité selon la revendication 1, dans lequel le câble de renfort de la nappe de carcasse est composé d'une fibre aramide et un allongement intermédiaire du câble de renfort, qui est pris à partir d'un bandage produit, de la nappe de carcasse dans une partie de couronne sous 66 N descend à une valeur allant de 0,5 à 2,5 %.

9. Bandage pneumatique de sécurité selon la revendication 1, dans lequel la composition d'agent adhésif est formulée dans la même solution.

10. Bandage pneumatique de sécurité selon la revendication 1, dans lequel le pourcentage de l'isocyanate bloqué dans la résine thermodurcissable va de 45 à 90 % en masse.

[Fig.1]

（a）

（b）

（c）

[Fig. 2]

[Fig.3]

Travel direction

[Fig.4]

[Fig.5]

[Fig.6]

**EP 2 946 947 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000355875 A
- JP 2012214139 A
- JP 2012162230 A
- JP 2012148661 A